**Europäisches Patentamt**

**European Patent Office**

**Office européen des brevets**

(19)

(11) **EP 1 425 830 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(21) Anmeldenummer: 02798638.9

(22) Anmeldetag: **10.09.2002**

(51) Int Cl.⁷: **H01S 3/131**, H01S 3/067

(86) Internationale Anmeldenummer:
**PCT/DE2002/003353**

(87) Internationale Veröffentlichungsnummer:
**WO 2003/026085 (27.03.2003 Gazette 2003/13)**

(54) **VERFAHREN ZUR REGELUNG EINER PUMPEINRICHTUNG BEI OPTISCHER VERSTÄRKUNG EINES ÜBERTRAGENEN WELLENLÄNGEN-MULTIPLEX(-WDM)-SIGNALS**

METHOD FOR CONTROLLING A PUMP UNIT WHILE OPTICALLY AMPLIFYING A TRANSMITTED WAVELENGTH MULTIPLEX (WDM) SIGNAL

PROCEDE POUR LE REGLAGE D'UN DISPOSITIF DE POMPAGE POUR UNE AMPLIFICATION OPTIQUE D'UN SIGNAL WDM (MULTIPLEXAGE EN LONGUEUR D'ONDE) TRANSMIS

(84) Benannte Vertragsstaaten:
**DE FR GB IT**

(30) Priorität: **12.09.2001 DE 10144948**

(43) Veröffentlichungstag der Anmeldung:
**09.06.2004 Patentblatt 2004/24**

(73) Patentinhaber: **SIEMENS AKTIENGESELLSCHAFT**
**80333 München (DE)**

(72) Erfinder: **RAPP, Lutz**
**82041 Deisenhofen (DE)**

(56) Entgegenhaltungen:
**EP-A- 0 762 569       EP-A- 1 045 535**
**EP-A- 1 115 185**

## Beschreibung

Die Erfindung betrifft ein Verfahren zur Regelung einer Pumpeinrichtung für die optische Verstärkung eines übertragenen Wellenlängen-Multiplex(-WDM)-Signals nach den Oberbegriffen der Patentansprüche 1 und 6.

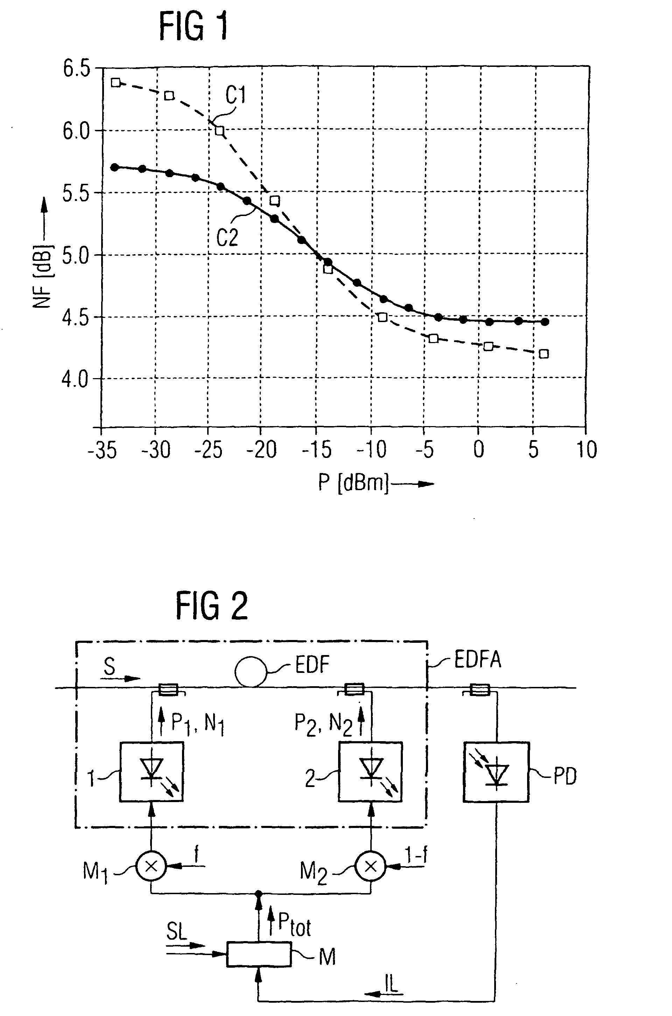

Für die Übertragung eines optischen WDM-Signals entlang langer Faserstrecken sind Verstärkermodule nach einzelnen Übertragungsabschnitten erforderlich. Eine wirkungsvolle Methode zur zusätzlichen Verstärkung eines Signals beruht auf der Verwendung von wenigstens einem Erbium-dotierten Faserverstärker EDFA, der eine oder mehrere an einer Erbium-dotierten Faser EDF angekoppelte Pumpquellen mit Wellenlängen von ca. 980 nm und/oder 1480 nm für eine Verstärkung des WDM-Signals im C- und L-Band (ca. 1525-1565 nm und ca. 1570-1610 nm) aufweist. Eine Realisierung eines Erbium dotierten Faserverstärkers ist aus US 5 140 456 bekannt. Dabei werden Pumpsignale aus den Pumpquellen in die Erbium-dotierte Faser eingespeist und ermöglichen eine Inversion bzw. eine teilweise Besetzung eines höheren Energie-Niveaus durch Absorption, die je nach Inversionsgrad und je nach Wellenlängenbereich des WDM-Signals zu einem Gewinn bzw. Verlust führen kann. Aufgabe eines Erbium-dotierten Faserverstärkers EDFA ist es hauptsächlich, einen flachen und hohen Gewinn bei einer niedrigen Rauschzahl zu gewährleisten. Ein Beispiel zur Realisierung eines solchen Faserverstärkers ist in "Optical Fiber Amplifier for WDM Optical Networks", Sun Y., Srivastava A. K., Zhou Jianhui, Sulhoff J. W. Bell Technical Journal, January-March 1999 ausführlich beschrieben. Zur Erzielung einer niedrigen Rauschzahl bei hohem Gewinn werden für einen zweistufigen Verstärker (siehe Fig. 2) in der ersten Stufe eine hohe Inversion und in der zweiten Stufe eine kleine Inversion eingestellt (siehe Seite 189, 1. Spalte).

Verfahren zur Kompensation einer Verkippung des Gewinns für alle Kanäle des WDM-Signals sind ebenfalls bekannt. Ein aktuelles Beispiel ist in "Active Gain-Slope Compensation of EDFA Using Thulium-Doped Fiber as saturable Absorber", Kitabayashi T., Aizawa T., Sakai T., Wada A., IEICE Transactions on Electronics, vol. E84-C, no. 5, pp. 605-609, May 2001 beschrieben. Hier werden bei Verwendung von kaskadierten Thulium-dotierten- und Erbium-dotierten Fasern die positiven und negativen Verkippungen des Gewinns im C-Band kompensiert. Eine Verwendung der Thulium-dotierten Fasern im Sättigungsbereich bei einer Übertragung im C-Band ist dafür Voraussetzung.

Aus EP 1 045 535 A2 ist ferner eine Regelung zur Erhaltung eines flachen Gewinns für alle Kanäle eines übertragenen WDM-Signals, insbesondere bei Temperaturenänderungen, bekannt (siehe Abstract).
Die Regelung weist unter anderem eine Pumpeinrichtung mit zwei über eine Erbium-dotierte Faser EDF verteilt angeordneten Pumpquellen zur Verstärkung eines übertragenen WDM-Signals auf, dessen Leistung am Übertragungsstreckenende durch eine Photodiode ermittelt und derart kontrolliert wird, daß mittels einer Kontrollschaltung entsprechende Ausgangsleistungen der Pumpquellen zur Erzielung eines Wellenlängenunabhängigen Gewinns für alle Kanäle des WDM-Signals am Übertragungsstreckenende geregelt werden. Zur Variation des Gewinns der übertragenen Kanäle sind zwei weitere Photodioden und ein von einem Kontroller gesteuertes variables optisches Dämpfungsglied vorgesehen.

Die aktuellen Verstärker für WDM-Signale sind also so realisiert, daß sie optimale Rauschzahlen und/oder Wellenlängenabhängige und hohe Gewinne bei maximaler Kanalanzahl als Signalbelegung liefern. Bedingt durch hohe Kanalzahlen moderner WDM-Übertragungssysteme erfordert das Pumpen der Erbium-dotierten Faser(n) sehr hohe Pumpleistungen, die häufig nur zur Verfügung gestellt werden können, indem innerhalb einer Verstärkerstufe an mehreren Stellen Pumplicht in die Erbium dotierte Faser eingekoppelt wird.

Im allgemein sind bei Inbetriebnahme nur wenige Kanäle gleichzeitig aktiv oder das Übertragungssystem ist bereits so ausgelegt, daß es nur bis zu einer gewissen Kanalzahl ausgebaut werden kann. Durch die im Vergleich zum Vollausbau deutlich reduzierten Eingangs- und Ausgangsleistungen muß jedoch eine geringere Pumpleistung eingestellt werden. Reduziert man die Pumpleistungen nun jeweils um einen Anteil, kann es zu einem Anstieg der Rauschzahl kommen.

Die folgende Abbildung (Fig. 1) beschreibt eine optische Verstärkung nach dem Stand der Technik. Deren Eigenschaften werden erläutert und die Nachteile beschrieben, die durch die vorliegende Erfindung beseitigt werden.

In Fig. 1 wird die Rauschzahl NF als Funktion der Eingangsleistung P des WDM-Signals dargestellt. Zur Verstärkung des WDM-Signals ist eine Pumpeinrichtung mit zwei über eine Erbium dotierte Faser angeordneten Pumpquellen vorgesehen. Die erste Pumpquelle hat eine Wellenlänge von 980 nm und die zweite Pumpquelle weist Wellenlängen von 980 nm (Kurve C1) bzw. 1480 nm (Kurve C2) auf. Angenommen wird, daß entsprechende Pumpsignale der untersuchten Pumpeinrichtung im Eingangsbereich bzw. in einem weiteren Bereich der Erbium dotierten Faser ko- bzw. kontradirektional eingespeist werden. Bei dieser Pumpeinrichtung werden die Pumpleistungen der Pumpquellen jeweils zu gleichen Anteilen je nach Änderung der Eingangsleistung des WDM-Signals, d.h. auch je nach Änderung der Anzahl der aktiven Kanäle, reduziert oder erhöht. Bei kleinen Eingangsleistungen steigt die Rauschzahl an.

Aus DE 100 58 059 A1 ist ein optischer Verstärker für WDM-Signale bekannt, der ein austauschbares Fasermodul zur Anpas sung der Verstärkung an unterschiedliche Eingangspegel bei optimalem Rauschverhalten aufweist.

Zur Erzielung kleiner Rauschzahlen ist aus der Literaturstelle "Quantum Limited Noise Figure Operation of High Gain Erbium Doped Fiber Amplifiers", Lumbohlt et al., Journal of Lightwave Technology, Vol. 11, Nr. 8, August 1993 ein optischer Verstärker mit einer ko, kontra- oder bidirektional gepumpten Verstärkungsfaser bekannt, über der ein Isolator zur Unterdrückung des Rauschens aus ASE (amplified spontaneaous emission) angeordnet ist. Je nach Positionierung des Isolators entlang der Verstärkungsfaser ist die Rauschzahl entsprechend verstellbar und also minimierbar.

Eine weitere Literaturstelle "Reliable 1.01-µm Band Laser Diode Pumped Praseodynium-Doped In/Ga-Based Fluride Fiber Amplifiers at 1.3 µm", Isshiki et al., Journal of Lightwave Technology, Vol. 16, Nr. 12, Dezember 1998 offenbart einen bidirektional gepumpten optischen Faserverstärker mit einer Praseodynium-dotierten In/Ga-Based Fluride-Faser als Verstärkungsfaser. Die Pegel eines verstärkten WDM-Signals am Ausgang des optischen Faserverstärkers können mit Hilfe einer Kontrolleinheit durch eine Regelung von zwischen Kontrolleinheit einerseits und Eingang- und Ausgangsleitung anderseits eingeschalteten Pumplaserdioden ausgeglichen werden. Zur Erzielung hoher Gewinne des optischen Faserverstärkers ist eine geeignete Länge der Verstärkungsfaser zu wählen.

Ebenfalls zur Regelung des Gewinns ist aus US 5 745 283 ein bidirektionaler gepumpter Faserverstärker mit zwei Laserdioden als Pumpquelle zur Verstärkung mehrerer Kanäle eines WDM-Signals bekannt, deren einzelne Pumpleistungen in Anhängigkeit eines abgezweigten Anteils jeder Ausgangsleitung der Kanäle am Ende des Faserverstärkers geregelt werden. Dadurch werden Gewinndifferenzen zwischen den Kanälen unterdrückt. Eine Trennung jedes Kanals am Ende des Faserverstärkers bleibt jedoch aufwendig. Bei Änderungen bzw. Erweiterung der Kanalzahl ermöglicht dieses System keine flexible Lösung.

Aus US 6 111 686 ist schließlich ein optischer Verstärker bzw. eine Methode zur optischen Verstärkung eines Signals bekannt, bei denen eine Reduzierung des Leistungsverbrauches sowie der Kosten des Systems hauptsächlich durch den Einsatz einer einzigen statt zwei Pumpquellen erzielt ist. Bei bekanntem Verfahren sind zwei verschiedene Arbeitsweisen vorgesehen. Einerseits wird zur Reduzierung der Rauschzahl des optischen Verstärkers eine Aufteilung der Ausgangspumpleistung in zwei Pumpsignale zum ko- und kontradirektionalen Pumpen so durchgeführt, dass die Leistung des ersten kodirektionalen Pumpsignals höher ist als die des zweiten kontradirektionalen Pumpsignals. Andererseits wird zur Erzielung einer hohen Ausgangsleistung des optischen Verstärkers die Leistung des zweiten Pumpsignals größer eingestellt als die des ersten Pumpsignals. Neben diesen beiden Einstellungen, nämlich einerseits zur Erzielung einer kleinen Rauschzahl und andererseits zur Erzielung einer hohen Ausgangsleistung, sind keine weitere Einstellungen vorgesehen.

EP-A-1 115 185 offenbart ein Verfahren zur Regelung einer Pumpeinrichtung mit mehreren Pumpquellen.

Die Aufgabe der vorliegenden Erfindung besteht nun darin, ein Verfahren zur Regelung von Pumpleistungen mehrerer Pumpquellen für eine variierende erforderliche Gesamt-Pumpleistung zur Verstärkung eines WDM-Signals bei minimaler Rauschzahl anzugeben.

Erfindungsgemäß wird diese Aufgabe durch ein Verfahren, das durch die Merkmale der Ansprüche 1 und 6 gekennzeichnet ist, gelöst.

Zweckmäßige Weiterbildungen werden in den abhängigen Ansprüchen beschrieben.

Ausgehend von einem Verfahren nach dem Merkmalen des Oberbegriffes des Anspruches 1 ist erfindungsgemäß vorgesehen, daß mit zunehmender erforderlicher Gesamt-Pumpleistung die Pumpleistung der ersten Pumpquelle zunächst stärker und anschließend schwächer zunimmt als die Pumpleistung der zweiten Pumpquelle. Dadurch wird die Rauschzahl des Faserverstärkers niedrig gehalten.

Zur Einstellung der Inversionen im Faserverstärker werden erfindungsgemäße Aussteuerungskennlinien für die erste und zweite Pumpquelle für eine vorteilhafte Aufteilung der gesamten erforderlichen Pumpleistung auf die erste und zweite Pumpquelle ermittelt.

Gemäß einer vorteilhaften Weiterbildung der Erfindung ist vorgesehen, daß die Aufteilung der gesamten erforderlichen Pumpleistung auf die erste und zweite Pumpquellen nach Anteilsparametern erfolgt, die in Abhängigkeit der erforderlichen Gesamt-Pumpleistung nach entsprechenden Beziehungen errechnet und gespeichert werden und weiterhin aus einer oder mehreren gespeicherten Tabellen abrufbar sind.

Steigung und Krümmungsparameter der Aussteuerungskennlinien der Pumpquellen werden derart gewählt, daß zunächst die hohe Inversion am Anfang der Übertragungsstrecke und dann die kleine Inversion am Ende der Übertragungsstrecke je nach der gesamten erforderlichen Pumpleistung gewährleistet sind. Ein Betrieb der Pumpquellen unterhalb ihrer Schwellströme wird ebenso insbesondere bei kontradirektionalen Pumpen vermieden. Weiterhin werden Signalverzerrungen durch eine stetige Differenzierbarkeit der Aussteuerungskennlinien der Pumpquellen vermieden.

Beim erfindungsgemäßen Verfahren werden alle Kanäle einen flachen Gewinn für unterschiedliche erforderliche Gesamt-Pumpleistungen am Ende des Faserverstärkers aufweisen.

Das erfindungsgemäße Verfahren kann auf mehr als zwei Pumpquellen erweitert werden. Weitere erfindungsgemäße Aussteuerungskennlinien der Ausgangsleistung von zusätzlichen Pumpquellen werden in Abhängigkeit der erforderlichen Gesamt-Pumpleistung definiert und gespeichert, so daß am Ende des Faserverstärkers eine minimale Rauschzahl des WDM-Signals durch eine optimale Einstellung der den Pumpquellen entsprechenden Inversionen erzielt wird.

Die Erweiterung auf mehr als zwei Pumpquellen im Faserverstärker dient dazu, die Ausgangsleistungen der ursprünglichen zwei Pumpquellen zu erhöhen, z.B. im Falle einer Inbetrieb-Kanalzahlerhöhung. Der Gewinn der alten Kanäle bleibt dadurch konstant und der notwendige Gewinn der neuen Kanäle wird ebenso korrekt angepaßt.

Ein Ausführungsbeispiel der Erfindung wird anhand der Zeichnung näher beschrieben. Dabei zeigen:

Figur 2: das schematische Prinzip des erfindungsgemäßen Verfahren für einen Faserverstärker mit zwei Pumpquellen,

Figur 3: die erfindungsgemäßen Aussteuerungskennlinien zweier Pumpquellen für verschiedene Parameterwerte,

Figur 4: den Vergleich der Rauschzahl nach dem Stand der Technik und nach dem erfindungsgemäßen Verfahren

Figur 5: das schematische Prinzip des erfindungsgemäßen Verfahren für einen Faserverstärker mit mehr als zwei Pumpquellen.

Figur 6: die erfindungsgemäßen Aussteuerungskennlinien für eine Anordnung gemäß Fig. 5 mit drei Pumpquellen

Die in **Fig. 2** dargestellte Schaltung zeigt einen nach dem erfindungsgemäßen Verfahren arbeitenden Faserverstärker EDFA mit einer Regeleinrichtung für eine an eine Erbium-dotierten Faser EDF angeschlossene Pumpeinrichtung. Anstelle einer Erbium-dotierten Faser EDF könnten auch andere Varianten von Fasern wie z. B. eine Thuliumdotierte Faser verwendet werden. Zur Verstärkung eines übertragenen WDM-Signals S werden eine erste Pumpquelle 1, deren Pumpsignal im Eingangsbereich des Faserverstärkers EDFA wirkt, und eine zweite Pumpquelle 2, deren Pumpsignal im weiteren Bereich des Faserverstärkers EDFA wirkt, verwendet. Am Ausgang des Faserverstärkers EDFA wird eine Ist-Leistung IL des WDM-Signals S z. B. mittels einer Photodiode PD ermittelt und mit einer Soll-Leistung SL mittels eines Moduls M verglichen. Die Soll-Leistung SL wird entsprechend der Eigenschaften des WDM-Signals während der Übertragung vor dem Faserverstärker EDFA vorgegeben und eingestellt, d.h. beispielsweise bei Kanalzahländerungen so, daß neue Werte der Soll-Leistung SL zur Einstellung eines gewünschten Gewinns der aktiven Kanäle führt. Nach dem Vergleich der Ist-Leistung IL mit der Soll-Leistung SL wird eine erforderliche Gesamt-Pumpleistung $P_{tot}$ eingestellt, die auf die Ausgangsleistungen P1 und P2 der Pumpquellen 1, 2 zur Erzielung einer minimalen Rauschzahl des verstärkten WDM-Signals S aufgeteilt wird. Die Aufteilung erfolgt in Abhängigkeit der Gesamt-Pumpleistung $P_{tot}$ mittels eines Anteilsparameters $f(P_{tot})$ bzw. $1-f(P_{tot})$, der im folgenden auch einfach als f bezeichnet wird. In der Praxis werden Signale zur Aussteuerung der Ausgangsleistungen P1, P2 bzw. der Inversionen N1, N2 der ersten und zweiten Pumpquellen 1, 2 mittels analogen Multiplikatoren oder digitalen Signalprozessoren M1, M2 mit dem Anteilsparameter f bzw. 1-f geregelt. Der Anteilsparameter f bzw. 1-f kann aus einer gespeicherten Tabelle je nach der erforderlichen Pumpleistung $P_{tot}$ neu abgerufen werden.

Die Inversionen N1 und N2 sind zusammen zu betrachten und bezeichnen eine gesamte mittlere Inversion am Fasereingang bzw. am weiteren Faserteil. Die mittlere Inversion sollte konstant bei dem vorliegenden Verfahren gehalten werden.

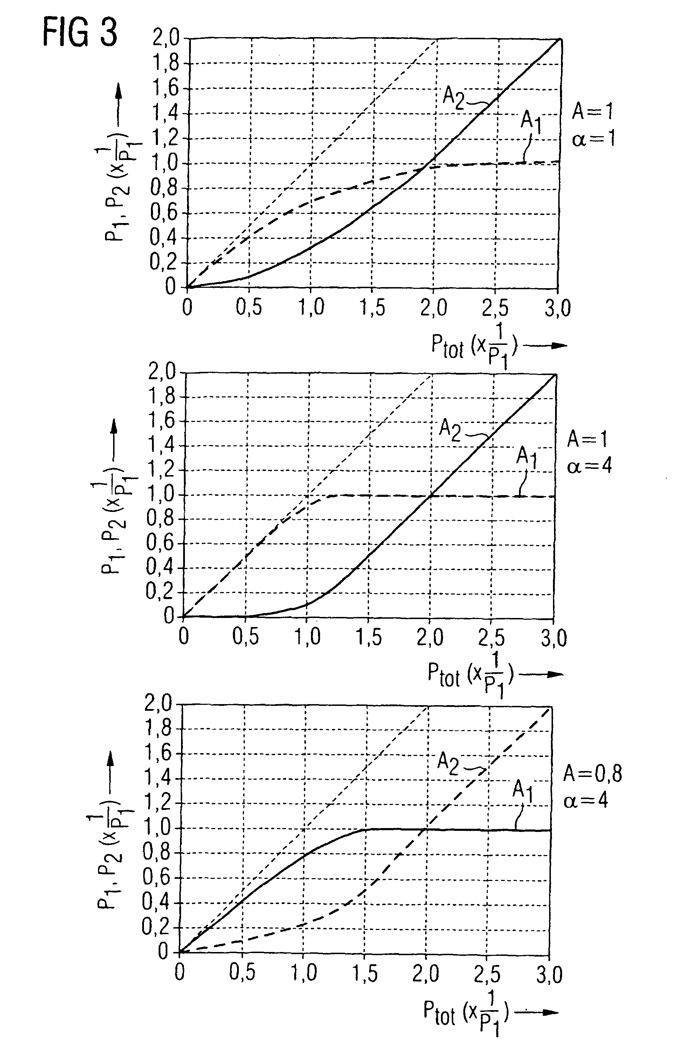

In **Fig. 3** sind erfindungsgemäße Aussteuerungskennlinien A1, A2 der Ausgangsleistungen P1, P2 der zwei Pumpquellen 1, 2 dargestellt. Eingetragene Werte der Ausgangsleistungen P1, P2 als Funktion der Gesamt-Pumpleistung $P_{tot}$ sowie die Gesamt-Pumpleistung $P_{tot}$ sind auf die Nominalleistung der ersten Pumpquelle 1 normiert. Prinzipiell wird die Ausgangsleistung P1 der ersten Pumpquelle bevorzugt, bis diese nahe an ihrer maximalen Leistung ist, und dann nur wird die Ausgangsleistung P2 der zweiten Pumpquelle ebenfalls erhöht. Im Gegensatz zu herkömmlichen Verfahren werden die Aussteuerungskennlinien A1, A2 durch eine erfindungsgemäße Einstellung der Steigung des Anteilsparameters $f(P_{tot})$ nicht linear definiert. Die Steigung von $f(P_{tot})$ ist bei einer kleinen Gesamtpumpleistung $P_{tot}$ positiv, verläuft stetig, wird mit zunehmender Gesamtpumpleistung $P_{tot}$ geringer und erreicht minimal den Wert Null. Dadurch wird die Ausgangleistung P2 der zweiten Pumpquelle 2 erst bei entsprechend genug großen Ausgangsleitungen P1 der ersten Pumpquelle 1 erhöht. Physikalisch bedeutet das, daß im Faserverstärker EDFA bei einer geringen Gesamt-Pump-leistung $P_{tot}$ eine hohe Inversion N1 durch die erste Pumpquelle 1 und eine kleine Inversion N2 durch die zweite Pumpquelle 2 bewirkt werden und daß mit zunehmender Gesamt-Pumpleistung $P_{tot}$ die Pumpleistung der ersten Pumpquelle 1 zunächst stärker und anschließend schwächer zunimmt als die Pumpleistung der zweiten Pumpquelle 2. Dadurch wird die Rauschzahl NF minimal gehalten.

Die Aussteuerungskennlinien A1, A2 zur Einstellung der Ausgangsleistungen P1, P2 sind durch folgende Beziehung definiert:

A1:

$$P1 = f \times P_{tot}$$

A2:

$$P2 = (1\text{-}f) \times P_{tot}$$

Der Anteilsparameter f ist dabei gemäß folgender Beziehung einstellbar:

$$\begin{cases} f = A \cdot \exp\left[-\dfrac{1}{\alpha} \cdot \exp(-1) \cdot (A \cdot P_{tot})^{\alpha}\right] & \text{für } P_{tot} \leq \dfrac{1}{A} \cdot \exp\left(\dfrac{1}{\alpha}\right) \\ \text{und} \\ f = \dfrac{1}{P_{tot}} & \text{für } P_{tot} > \dfrac{1}{A} \cdot \exp\left(\dfrac{1}{\alpha}\right) \end{cases}$$

wobei A die Steigung beim Ansteuerungsnullpunkt der Aussteuerungskennlinie A1 der Pumpquelle 1 und $\alpha$ den Krümmungsparameter der Aussteuerungskennlinien A1, A2 der beiden Pumpquellen 1, 2 bedeuten.

In Fig. 3 sind drei mögliche Sätze von Aussteuerungskennlinien A1, A2 für verschiedene Parameter A, $\alpha$ dargestellt. Die Darstellung mit A=1 und $\alpha$=1 zeigt das erfindungsgemäße Profil der Aussteuerungskennlinien A1, A2, damit die Inversionen N1, N2 korrekt bewirkt werden. Dies bedeutet, daß die Ausgangsleistungen P1, P2 der Pumpquellen 1, 2 nicht um den gleichen Anteil bei unterschiedlich erforderlichen Gesamt-Pumpleistungen $P_{tot}$ reduziert oder erhöht werden, sondern entsprechend der ungleichen Anteilsparametern f, 1-f in Abhängigkeit der Gesamt-Pumpleistung $P_{tot}$ eingestellt werden.

Das Ausführungsbeispiel in Fig. 3 mit A=1 und $\alpha$=4 zeigt zwei Aussteuerungskennlinien A1, A2 mit starker Krümmung durch die Wahl eines großen Werts für den Krümmungsparameter $\alpha$. Vorteilhaft ist dabei, daß die Inversion N2 viel kleiner ist als die Inversion N1 bei kleiner Gesamt-Pumpleistung $P_{tot}$. Die Rauschzahl wird dadurch erheblich kleiner. Bei einem hohen Wert des Krümmungsparameters $\alpha$ werden allerdings scharfe Knickstellen der Aussteuerungskennlinien A1, A2 bei einer Gesamt-Pumpleistung $P_{tot}$ von ca. $P_{tot}$=P1 gebildet. Bei scharfen Knickstellen können Verzerrungen des WDM-Signals S durch Schwingungen der Regelung auftreten. Deshalb sollte auch der Wert des Krümmungsparameters $\alpha$ angemessen gewählt werden.

Das letzte Ausführungsbeispiel der Fig. 3 mit A=0,8 und $\alpha$=4 zeigt eine optimale erfindungsgemäße Einstellung der Aussteuerungskennlinien A1, A2 der beiden Pumpquellen 1, 2 in Abhängigkeit der Gesamt-Pumpleistung $P_{tot}$. Desweiteren werden die Pumpquellen 1, 2 im laufendem Betrieb immer oberhalb Ihrer Schwellströme betrieben. Dies gilt insbesondere für kontradirektionales Pumpen.

Zur entsprechenden Einstellung der Pumpleistungen der ersten und zweiten Pumpquelle 1, 2 kann der Anteilsparameter f bzw. 1-f aus einer gespeicherten Tabelle abgerufen werden.

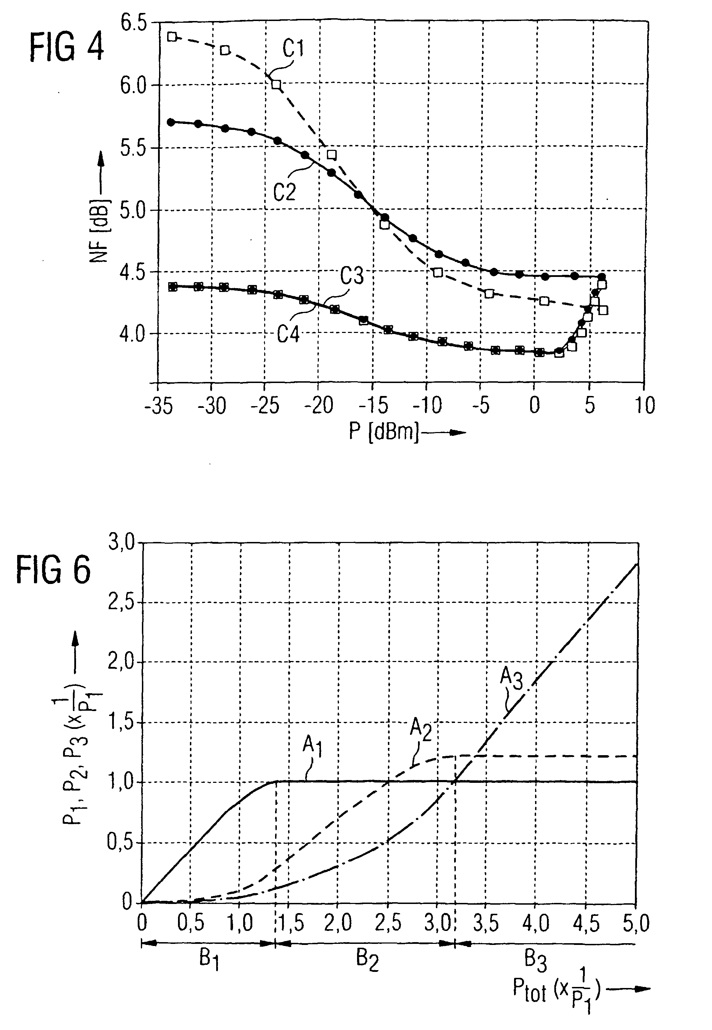

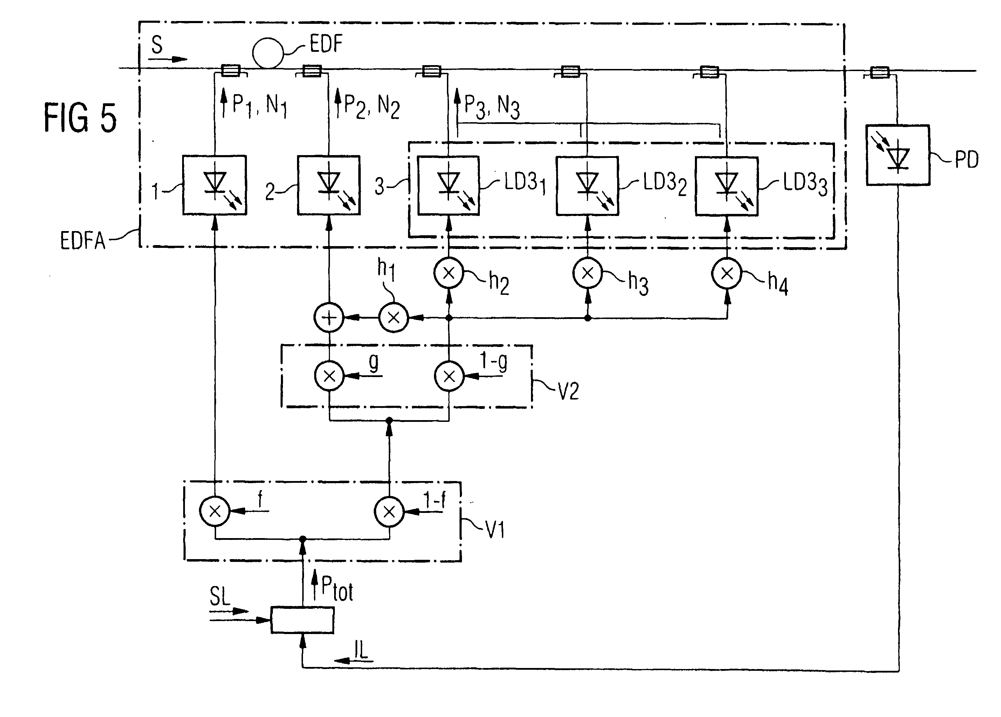

In **Fig. 4** ist die Rauschzahl NF nach dem erfindungsgemäßen Verfahren (Kurven C3 und C4) als Funktion der Eingangsleistungen P des WDM-Signals im Vergleich zum Stand der Technik (siehe auch Fig. 1, Kurve C1 und C2) dargestellt. Die verwendete Pumpeinrichtung ist diejenige, die in Fig. 1 beschrieben wurde, wobei die Aussteuerungskennlinien A1, A2 dem Ausführungsbeispiel in Fig. 3 erfindungsgemäß entsprechen. Bei kleinen und höheren Eingangsleistungen P bleibt die Rauschzahl niedrig.

**Fig. 5** zeigt das schematische Prinzip des erfindungsgemäßen Verfahrens zur Regelung einer Pumpeinrichtung eines Faserverstärkers EDFA mit mehr als zwei Pumpquellen. Bei Bedarf, beispielweise bei Kanalzahlerhöhung, kann eine weitere Pumpquelle erforderlich sein. Das erfindungsgemäße Verfahren ist für diese Erweiterung mit externen Pumpmodulen geeignet, die sukzessiv ohne Betriebsunterbrechung hinzugefügt werden können. Bei diesem Ausführungsbeispiel wird eine dritte Pumpquelle 3 zusätzlich zur ersten und zweiten Pumpquelle 1, 2 (siehe Fig. 2) zur Verstärkung eines übertragenen WDM-Signals S verwendet.

Ausgangsleistungen P1, P2, P3 der ersten Pumpquelle 1, deren Pumpsignal im Eingangsbereich des Faserverstärkers EDFA wirkt, der zweiten Pumpquelle 2, deren Pumpsignal im weiteren Bereich des Faserverstärkers EDFA wirkt, und der dritten Pumpquelle 3, deren Pumpsignal im Ausgangsbereich des Faserverstärkers EDFA wirkt, werden zur Erzielung einer minimalen Rauschzahl des verstärkten WDM-Signals S geregelt. Eine Ist-Leistung IL des WDM-Signals S wird am Ausgang des Faserverstärkers EDFA ermittelt und mit einer Soll-Leistung SL verglichen und daraus eine erforderliche Gesamt-Pumpleistung $P_{tot}$ eingestellt. Zur Erzielung einer optimalen Rauschzahl des WDM-Signals S werden die Ausgangsleistungen P1, P2, P3 der Pumpquellen 1, 2, 3 in Abhängigkeit der Gesamt-Pumpleistung $P_{tot}$ derart eingestellt, daß im Faserverstärker EDFA bei einer geringen Gesamt-Pumpleistung $P_{tot}$ eine hohe Inversion N1 durch die erste Pumpquelle 1 und kleine Inversionen N2, N3 durch die zweite und dritte Pumpquelle 2, 3 bewirkt werden. Bei zunehmender mittlerer Gesamt-Pumpleistung $P_{tot}$ nimmt die Pumpleistung P1 der ersten Pumpquelle 1 zunächst stärker und anschließend schwächer zu als die Pumpleistung der zweiten Pumpquelle 2 bei niedriger Pumpleistung der dritten Pumpquelle 3, so daß hohe Inversionen N1, N2 durch die erste und zweite Pumpquelle 1, 2 und eine kleine Inversion N3 durch die dritte Pumpquelle 3 bewirkt werden. Schließlich nimmt bei zunehmender großer Gesamt-Pumpleistung $P_{tot}$ die Pumpleistung der zweiten Pumpquelle 2 zunächst stärker und anschließend schwächer zu als die Pumpleistung der dritten Pumpquelle 3.

Aussteuerungskennlinien der drei Pumpquellen 1, 2, 3 stellen die Inversionen N1, N2, N3 durch zwei Aufteilungen V1, V2 der Gesamt-Pumpleistung $P_{tot}$ auf die Pumpquellen 1, 2, 3 ein, wobei die erste Aufteilung V1 der Gesamt-Pumpleistung $P_{tot}$ auf die erste Pumpquelle 1 und auf die weiteren Pumpquellen 2, 3 nach einstellbaren Anteilsparametern f($P_{tot}$), 1-f($P_{tot}$) derart erfolgt, daß die Steigung von f($P_{tot}$) bei einer kleinen Gesamtpumpleistung $P_{tot}$ positiv ist, stetig verläuft, mit zunehmender Gesamtpumpleistung $P_{tot}$ geringer wird und minimal den Wert Null erreicht. Die zweite Aufteilung V2 teilt die eine der beiden vorher aufgeteilten Pumpleistung [1-f($P_{tot}$)] $\times$ $P_{tot}$ auf die Pumpquelle 2 und auf die Pumpquelle 3 nach einstellbaren Anteilsparametern g($P_{tot}$), 1-g($P_{tot}$) auf, wobei die Steigung von g($P_{tot}$) positiv ist und zuerst bei einer kleinen Gesamtpumpleistung $P_{tot}$ größer als die Steigung von f($P_{tot}$) gewählt werden kann, stetig verläuft, mit zunehmender Gesamtpumpleistung $P_{tot}$ geringer wird und minimal den Wert Null erreicht.

Zur entsprechenden Einstellung der Pumpleistungen der ersten, zweiten und dritten Pumpquelle 1, 2, 3 können die Anteilsparameter f, g bzw. 1-f, 1-g aus gespeicherten Tabellen abgerufen werden.

In der dritten Pumpquelle 3 werden mehrere Laserdioden $LD3_k$ mit k>0 betrieben, deren Ausgangsleistungen $L3_k$ jeweils nach einer dritten Aufteilung auf die für die dritte Pumpquelle 3 vorgesehene Pumpleistung [1-g($P_{tot}$)] $\times$ [1-f($P_{tot}$)] $\times$ $P_{tot}$ geregelt sind. Eine Einstellung der Ausgangsleistungen $L3_k$ der einzelnen Laserdioden $LD3_k$ erfolgt nach weiteren Aufteilungsfaktoren h1, h2, h3, h4 derart, daß je nach Einstellung des Aufteilungsfaktors h1 die dritte Aufteilung der Pumpleistung [1-g($P_{tot}$)] $\times$ [1-f($P_{tot}$)] $\times$ $P_{tot}$ einerseits zurück auf die zweite Pumpquelle 2 anderseits auf die Laserdioden $LD3_k$ der dritten Pumpquelle 3 erfolgt.

Die Regelung der Pumpleistungen P1, P2, P3 nach erfindungsgemäßen Aussteuerungskennlinien A1, A2, A3 folgt in Abhängigkeit von Anteilsparametern f($P_{tot}$) und g($P_{tot}$) gemäß folgender Beziehungen:

A1:

$$P1 = f \times P_{tot}$$

A2:

$$P2 = (1\text{-}f) \times [\, g + h1 \times (1\text{-}g)\, ] \times P_{tot}$$

A3:

$$P3 = (1\text{-}f) \times [\, (1\text{-}h1) \times (1\text{-}g)\, ] \times P_{tot}$$

Aus Gründen der einfacheren Darstellung wurden die Anteilsparameter f($P_{tot}$) und g($P_{tot}$) mit f und g bezeichnet.

Jede Laserdiode $LD3_k$ der dritten Pumpquelle 3 liefert eine Ausgangsleistung $P3_k$ bei h1=0, die wie folgt definiert ist:

$LD3_k$:

$$P3_k = h_{k+1} \times P3$$

mit k>0

Bei der Einstellung h1=1 ist die Pumpquelle 3 praktisch ausgeschaltet, d. h. P3 = $P3_k$ = 0 für k>0. Das Verfahren gilt hier also für dasjenige von Fig. 2 nur mit den zwei Pumpquellen 1, 2.

Die Verwendung des Aufteilungsfaktors h1 (= 1 oder 0) ermöglicht also eine Ein- oder Ausschaltung der Pumpquelle 3.

In **Fig. 6** sind erfindungsgemäße Aussteuerungskennlinien A1, A2, A3 für die Regelung der Ausgangsleistungen P1, P2, P3 der drei Pumpquellen 1, 2, 3 von Fig. 5 dargestellt. Drei Bereiche B1, B2, B3 bei steigender Gesamt-Pumpleistung $P_{tot}$ zeigen die sukzessiven Pumpleistungserhöhungen der Pumpquellen 1, 2, 3, damit die gewünschten Bedingungen für die respektiven Inversionen N1, N2, N3 zur Minimierung der Rauschzahl NF des WDM-Signals S bei unterschiedlichen Gesamt-Pumpleistungen $P_{tot}$ erfüllt werden.

Das erfindungsgemäße Verfahren eignet sich durch Anpassung der Aussteuerungskennlinien für Pumpeinrichtungen, deren Pumpquellen 1, 2, 3, ... ihre Pumpsignale jeweils ko-und/oder kontradirektional in die Faser EDF anspeisen.

Das erfindungsgemäße Verfahren ist für ein WDM-Übertragungssystem mit Polarisation-Multiplex-Technik durch Erweiterung der gespeicherten Tabellen zur neuen Einstellung der Anteilsparametern f und g in Abhängigkeit der erforderlichen Gesamt-Pumpleistung $P_{tot}$ anwendbar.

**Patentansprüche**

1.  Verfahren zur Regelung einer Pumpeinrichtung eines Faserverstärkers (EDFA) zur Verstärkung eines übertragenen Wellenlängen-Multiplex(-WDM)-Signals (S) mit einer ersten Pumpquelle (1), deren Pumpsignal im Eingangsbereich des Faserverstärkers (EDFA) wirkt, und mit einer zweiten Pumpquelle (2), deren Pumpsignal im weiteren Bereich des Faserverstärkers (EDFA) wirkt, bei dem eine Ist-Leistung (IL) des WDM-Signals (S) am Ausgang des Faserverstärkers (EDFA) ermittelt wird und die Ausgangsleistungen (P1) und (P2) der beiden Pumpquellen (1) und (2) zur Erzielung einer günstigen Rauschzahl des verstärkten WDM-Signals (S) geregelt werden, wobei bei einer entsprechenden der Zahl aktiver Kanäle variierenden Gesamt-Pumpleistung die ermittelte Ist-Leistung (IL) des WDM-Signals (S) mit einer Soll-Leistung (SL) verglichen und
    eine erforderliche Gesamt-Pumpleistung $P_{tot}$ eingestellt wird und
    zur Erzielung einer optimalen Rauschzahl des WDM-Signals (S) die Ausgangsleistungen (P1) und (P2) der beiden Pumpquellen (1, 2) in Abhängigkeit von der Gesamt-Pumpleistung $P_{tot}$ derart eingestellt werden, daß in dem Faserverstärker (EDFA) bei einer geringen Gesamt-Pumpleistung $P_{tot}$ eine hohe Inversion (N1) durch die erste Pumpquelle (1) und eine kleine Inversion (N2) durch die zweite Pumpquelle (2) bewirkt werden, **dadurch gekennzeichnet daß** mit zunehmender Gesamt-Pumpleistung $P_{tot}$ die Pumpleistung der ersten Pumpquelle (1) zunächst stärker und anschließend schwächer zunimmt als die Pumpleistung der zweiten Pumpquelle (2).

2.  Verfahren nach Anspruch 1,
    **dadurch gekennzeichnet,**
    **dass** Aussteuerungskennlinien (A1, A2) zur Einstellung der Inversionen (N1, N2) bzw. der Ausgangsleistungen (P1, P2) durch Aufteilung der Gesamt-Pumpleistung $P_{tot}$ auf die beiden Pumpquellen (1, 2) ermittelt werden,
    wobei die Aufteilung der Gesamt-Pumpleistung $P_{tot}$ auf die beiden Pumpquellen (1, 2) nach einstellbaren Anteilsparametern $f(P_{tot})$, $1-f(P_{tot})$ erfolgt,
    wobei die Steigung von $f(P_{tot})$ bei einer kleinen Gesamtpumpleistung $P_{tot}$ positiv ist, stetig verläuft, mit zunehmender Gesamtpumpleistung $P_{tot}$ geringer wird und minimal den Wert Null erreicht.

3.  Verfahren nach Anspruch 2,
    **dadurch gekennzeichnet,**
    **dass** für den Anteilsparameter f gilt:

$$\begin{cases} f = A \cdot \exp\left[ - \frac{1}{\alpha} \cdot \exp(-1) \cdot (A \cdot P_{tot})^{\alpha} \right] & \text{für } P_{tot} \leq \frac{1}{A} \cdot \exp\left(\frac{1}{\alpha}\right) \\ \text{und} \\ f = \frac{1}{P_{tot}} & \text{für } P_{tot} > \frac{1}{A} \cdot \exp\left(\frac{1}{\alpha}\right) \end{cases}$$

wobei A die Steigung bei Ansteuerungsnullpunkt der Aussteuerungskennlinie (A1) der Pumpquelle (1) und $\alpha$ der Krümmungsparameter der Aussteuerungskennlinien (A1, A2) ist.

**4.** Verfahren nach Ansprüche 2 oder 3,
**dadurch gekennzeichnet,**
**dass** der Anteilsparameter f bzw. 1-f zur entsprechenden Einstellung der Pumpleistungen der ersten und zweiten Pumpquelle (1, 2) aus einer gespeicherten Tabelle abgerufen wird.

**5.** Verfahren nach einem der vorgehenden Ansprüche,
**dadurch gekennzeichnet,**
**dass** in eine Erbium-dotierte Faser (EDF) des Faserverstärkers (EDFA) Pumpsignale der Pumpquelle (1, 2) ko- und/oder kontradirektional eingespeist werden,
**daß** für die erste Pumpquelle (1) eine Pumpwellenlänge von ca. 980 nm und/oder 1480nm und für die zweite Pumpquelle (2) Pumpwellenlängen von ca. 980 nm und/oder 1480nm verwendet werden.

**6.** Verfahren zur Regelung einer Pumpeinrichtung eines Faserverstärkers (EDFA) zur Verstärkung eines übertragenen Wellenlängen-Multiplex(-WDM)-Signals (S) mit einer ersten Pumpquelle (1), deren Pumpsignal im Eingangsbereich des Faserverstärkers (EDFA) wirkt, mit einer zweiten Pumpquelle (2), deren Pumpsignal im weiteren Bereich des Faserverstärkers (EDFA) wirkt, und mit wenigstens einer dritten Pumpquelle (3), deren Pumpsignal im Ausgangsbereich des Faserverstärkers (EDFA) wirkt, bei dem eine Ist-Leistung (IL) des WDM-Signals (S) am Ausgang des Faserverstärkers (EDFA) ermittelt wird und die Ausgangsleistungen (P1, P2, P3) der Pumpquellen (1, 2, 3) zur Erzielung einer günstigen Rauschzahl des verstärkten WDM-Signals (S) geregelt werden, wobei bei einer entsprechenden der Zahl aktiver Kanäle variierenden Gesamt-Pumpleistung die ermittelte Ist-Leistung (IL) des WDM-Signals (S) mit einer Soll-Leistung (SL) verglichen und eine erforderliche Gesamt-Pumpleistung $P_{tot}$ eingestellt wird und zur Erzielung einer optimalen Rauschzahl des WDM-Signals (S) die Ausgangsleistungen (P1, P2, P3) der Pumpquellen (1, 2, 3) in Abhängigkeit von der Gesamt-Pumpleistung $P_{tot}$ derart eingestellt werden, in dem Faserverstärker (EDFA) bei einer geringen Gesamt-Pumpleistung $P_{tot}$ eine hohe Inversion (N1) durch die erste Pumpquelle (1) und kleine Inversionen (N2, N3) durch die zweite und dritte Pumpquellen (2, 3) bewirkt werden und mit zunehmender Gesamt-Pumpleistung $P_{tot}$ die Pumpleistung der ersten Pumpquelle (1) zunächst stärker und anschließend schwächer zunimmt als die Pumpleistung der zweiten Pumpquelle (2), wobei die Pumpleistung der zweiten Pumpquelle stärker zunimmt als die Pumpleistung der dritten Pumpquelle (3), so daß hohe Inversionen (N1, N2) durch die erste und zweite Pumpquelle (1, 2) und eine kleine Inversion (N3) durch die dritte Pumpquelle (3) bewirkt werden, und mit weiter zunehmender Gesamt-Pumpleistung $P_{tot}$ die Pumpleistung der zweiten Pumpquelle (2) zunächst stärker und anschließend schwächer zunimmt als die Pumpleistung der dritten Pumpquelle (3).

**7.** Verfahren nach Anspruch 6,
**dadurch gekennzeichnet,**
**dass** Aussteuerungskennlinien (A1, A2, A3) zur Einstellung der Inversionen (N1, N2, N3) bzw. der Ausgangsleistungen (P1, P2, P3) durch zwei Aufteilungen (V1, V2) der Gesamt-Pumpleistung $P_{tot}$ auf die Pumpquellen (1, 2, 3) derart ermittelt werden,
**dass** die erste Aufteilung (V1) der Gesamt-Pumpleistung $P_{tot}$ auf die erste Pumpquelle (1) und auf die weiteren Pumpquellen (2, 3) nach einstellbaren Anteilsparametern $f(P_{tot})$, $1-f(P_{tot})$ erfolgt, wobei die Steigung von $f(P_{tot})$ bei einer kleinen Gesamtpumpleistung $P_{tot}$ positiv ist, stetig verläuft, mit zunehmender Gesamtpumpleistung $P_{tot}$ geringer wird und minimal den Wert Null erreicht,
und **daß** die zweite Aufteilung (V2) der einen der beiden vorher aufgeteilten Pumpleistungen $[1-f(P_{tot})] \times P_{tot}$ auf die zweite Pumpquelle (2) und auf die dritte Pumpquelle (3) nach einstellbaren Anteilsparametern $g(P_{tot})$, $1-g(P_{tot})$ erfolgt, wobei die Steigung von $g(P_{tot})$ positiv ist, stetig verläuft, mit zunehmender Gesamtpumpleistung $P_{tot}$ geringer wird und minimal den Wert Null erreicht.

**8.** Verfahren nach Anspruch 6 oder 7,
**dadurch gekennzeichnet,**
**dass** für die Anteilsparameter f und g gilt:

$$\begin{cases} f = A \cdot \exp\left[-\frac{1}{\alpha} \cdot \exp(-1) \cdot (A \cdot P_{tot})^{\alpha}\right] & \text{für } P_{tot} \leq \frac{1}{A} \cdot \exp\left(\frac{1}{\alpha}\right) \\ \text{und} \\ f = \frac{1}{P_{tot}} & \text{für } P_{tot} > \frac{1}{A} \cdot \exp\left(\frac{1}{\alpha}\right) \end{cases}$$

und

$$\begin{cases} g = B & \text{für } P_{tot} \leq 1 \\ g = B \cdot \exp\left[-\frac{1}{\beta} \cdot \exp(-1) \cdot \left\{\frac{\beta}{\delta}\left(P_{tot} - 1\right)^{\beta}\right\}\right] & \text{für } 1 < P_{tot} \leq \exp\left(\frac{1}{\beta}\right) \cdot \frac{\delta}{B} + 1 \\ g = \frac{\delta}{P_{tot} - 1} & \text{für } P_{tot} > \exp\left(\frac{1}{\beta}\right) \cdot \frac{\delta}{B} + 1 \end{cases}$$

wobei A die Steigung bei Ansteuerungsnullpunkt der Aussteuerungskennlinie (A1) der Pumpquelle (1) und $\alpha$ der Krümmungsparameter der Aussteuerungskennlinien (A1, A2) ist,
und
wobei B den Faktor zur gewichteten Verteilung der erst durch die erste Aufteilung (V1) aufgeteilten Pumpleistung $[1\text{-}f(P_{tot})] \times P_{tot}$ zwischen den Ausgangsleistungen der zweiten, dritten und gegebenenfalls weiteren Pumpquellen (2, 3, ...), $\beta$ den Krümmungsparameter der Aussteuerungskennlinie (A2) der Pumpquelle (2) und $\delta$ den Quotienten aus den Nominalleistungen der ersten und zweiten Pumpquellen (1, 2) bedeuten.

9. Verfahren nach Anspruch 6, 7 oder 8,
   **dadurch gekennzeichnet,**
   **dass** die Anteilsparameter f, g bzw. 1-f, 1-g zur entsprechenden Einstellung der Ausgangsleistungen der ersten, zweiten und dritten Pumpquelle (1, 2, 3) aus gespeicherten Tabellen abgerufen werden.

10. Verfahren nach Anspruch 6, 7, 8 oder 9,
    **dadurch gekennzeichnet,**
    **dass** in der dritten Pumpquelle (3) mehrere Laserdioden ($LD3_k$) (k>0) betrieben werden, deren Ausgangsleistungen ($L3_k$) jeweils nach einer dritten Aufteilung auf die für die dritte Pumpquelle (3) vorgesehene Pumpleistung $[1\text{-}g(P_{tot})] \times [1\text{-}f(P_{tot})] \times P_{tot}$ geregelt sind,
    **dass** eine Einstellung der Ausgangsleistungen ($L3_k$) der einzelnen Laserdioden ($LD3_k$) nach weiteren Aufteilungsfaktoren (h1, h2, h3, h4) derart erfolgt, dass je nach Einstellung des Aufteilungsfaktors (h1) die dritte Aufteilung der Pumpleistung $[1\text{-}g(P_{tot})] \times [1\text{-}f(P_{tot})] \times P_{tot}$ einerseits zurück auf die zweite Pumpquelle (2) anderseits auf die Laserdioden ($LD3_k$) der dritten Pumpquelle (3) erfolgt.

**Claims**

1. Method for controlling a pump device of a fibre amplifier (EDFA) for amplification of a transmitted wavelength division multiplex (WDM) signal (S) with a first pump source (1), the pump signal of which operates in the input area of the fibre amplifier (EDFA), and with a second pump source (2), the pump signal of which operates in the further area of the fibre amplifier (EDFA), wherein an actual power (IL) of the WDM signal (S) is determined at the output of the fibre amplifier (EDFA) and the output powers (P1) and (P2) of the two pump sources (1) and (2) are controlled in order to achieve a favourable noise figure of the amplified WDM signal (S), whereby
   at an appropriate total pump power varying according to the number of active channels the determined actual power (IL) of the WDM signal (S) is compared with a reference power (SL)
   and
   a required total pump power $P_{tot}$ is set

and

in order to achieve an optimal noise figure of the WDM signal (S) the output powers (P1) and (P2) of the two pump sources (1, 2) are set as a function of the total pump power $P_{tot}$ such that in the fibre amplifier (EDFA), at a low total pump power $P_{tot}$, a high inversion (N1) is produced by the first pump source (1) and a small inversion (N2) is produced by the second pump source 2, **characterised in that** with increasing total pump power $P_{tot}$ the pump power of the first pump source (1) increases initially more strongly and subsequently less strongly than the pump power of the second pump source (2).

2. Method according to Claim 1,
   **characterised in that**
   modulation characteristics (A1, A2) for setting the inversions (N1, N2) or the output powers (P1, P2) are determined by distribution of the total pump power $P_{tot}$ to the two pump sources (1, 2),
   whereby the distribution of the total pump power $P_{tot}$ to the two pump sources (1, 2) is performed according to settable proportion parameters
   $f(P_{tot})$, $1-f(P_{tot})$,
   whereby the gradient of $f(P_{tot})$ at a small total pump power $P_{tot}$ is positive, proceeds constantly, decreases with increasing total pump power $P_{tot}$ and reaches the value zero as a minimum.

3. Method according to Claim 2,
   **characterised in that**
   the following applies to the proportion parameter f:

$$f = A \cdot \exp[- \frac{1}{\alpha} \cdot \exp(-1) \cdot (A \cdot P_{tot})^{\alpha}] \text{ for } P_{tot} \leq \frac{1}{A} \cdot \exp\left(\frac{1}{\alpha}\right)$$

and

$$f = \frac{1}{Ptot} \qquad \text{for } P_{tot} > \frac{1}{A} \cdot \exp\left(\frac{1}{\alpha}\right)$$

where A is the gradient at the selection zero point of the modulation characteristic (A1) of the pump source (1) and $\alpha$ is the curvature parameter of the modulation characteristics (A1, A2).

4. Method according to Claims 2 or 3,
   **characterised in that**
   the proportion parameter f or 1-f for appropriate setting of the pump powers of the first and second pump source (1, 2) is retrieved from a stored table.

5. Method according to one of the preceding Claims,
   **characterised in that**
   pump signals of the pump source (1, 2) are injected co- and/or contradirectionally into an erbium-doped fibre (EDF) of the fibre amplifier (EDFA),
   a pump wavelength of approx. 980 nm and/or 1480 nm is used for the first pump source (1) and pump wavelengths of approx. 980 nm and/or 1480 nm are used for the second pump source (2).

6. Method for controlling a pump device of a fibre amplifier (EDFA) for amplifying a transmitted wavelength division multiplex (WDM) signal (S) with a first pump source (1), the pump signal of which operates in the input area of the fibre amplifier (EDFA), with a second pump source (2), the pump signal of which operates in the further area of the fibre amplifier (EDFA), and with at least a third pump source (3), the pump signal of which operates in the output area of the fibre amplifier (EDFA), wherein an actual power (IL) of the WDM signal (S) is determined at the output of the fibre amplifier (EDFA) and the output powers (P1, P2, P3) of the pump sources (1, 2, 3) are controlled in order to achieve a favourable noise figure of the amplified WDM signal (S), whereby
   at an appropriate total pump power varying according to the number of active channels the determined actual power (IL) of the WDM signal (S) is compared with a reference power (SL) and
   a required total pump power $P_{tot}$ is set
   and
   in order to achieve an optimal noise figure of the WDM signal (S) the output powers (P1, P2, P3) of the pump sources (1, 2, 3) are set as a function of the total pump power $P_{tot}$ such

that

in the fibre amplifier (EDFA), at a low total pump power $P_{tot}$, a high inversion (N1) is produced by the first pump source (1) and small inversions (N2, N3) are produced by the second and third pump sources (2, 3) and

with increasing total pump power $P_{tot}$ the pump power of the first pump source (1) increases more strongly initially and less strongly subsequently than the pump power of the second pump source (2), whereby the pump power of the second pump source increases more strongly than the pump power of the third pump source (3), with the result that high inversions (N1, N2) are produced by the first and second pump source (1, 2) and a small inversion (N3) is produced by the third pump source (3)

and with further increasing total pump power $P_{tot}$ the pump power of the second pump source (2) increases initially more strongly and subsequently less strongly than the pump power of the third pump source (3).

**7.** Method according to Claim 6,
**characterised in that**
modulation characteristics (A1, A2, A3) for setting the inversions (N1, N2, N3) or the output powers (P1, P2, P3) by means of two distributions (V1, V2) of the total pump power $P_{tot}$ to the pump sources (1, 2, 3) are determined such that the first distribution (V1) of the total pump power $P_{tot}$ to the first pump source (1) and to the further pump sources (2, 3) is performed according to settable proportion parameters $f(P_{tot})$, $1-f(P_{tot})$, whereby the gradient of $f(P_{tot})$ is positive at a small total pump power $P_{tot}$, proceeds constantly, decreases with increasing total pump power $P_{tot}$ and reaches the value zero as a minimum

and the second distribution (V2) of one of the two previously distributed pump powers $[1-f(P_{tot})] \times P_{tot}$ to the second pump source (2) and to the third pump source (3) is performed according to settable proportion parameters $g(P_{tot})$, $1-g(P_{tot})$, whereby the gradient of $g(P_{tot})$ is positive, proceeds constantly, decreases with increasing total pump power $P_{tot}$ and reaches the value zero as a minimum.

**8.** Method according to Claim 6 or 7,
**characterised in that**
the following applies to the proportion parameters f and g:

$$f = A \cdot \exp[- \frac{1}{\alpha} \cdot \exp(-1) \cdot (A \cdot P_{tot})^{\alpha}] \text{ for } P_{tot} \leq \frac{1}{A} \cdot \exp\left(\frac{1}{\alpha}\right)$$

and

$$f = \frac{1}{Ptot} \qquad \text{for } P_{tot} > \frac{1}{A} \cdot \exp\left(\frac{1}{\alpha}\right)$$

and

$$g = B \qquad \text{for } P_{tot} \leq 1$$

$$g = B \cdot \exp[-\frac{1}{\beta} \cdot\cdot \exp(-1) \cdot \{\frac{\beta}{\delta} (P_{tot} -1)^{\alpha}\}] \quad \text{for } 1 < P_{tot} \leq \exp \frac{1}{\beta} \cdot \left(\frac{\delta}{B}\right) + 1$$

$$g = \frac{\delta}{Ptot-1} \qquad \text{for } P_{tot} > \exp(1\beta) \cdot \frac{\delta}{B} + 1$$

where A is the gradient at the selection zero point of the modulation characteristic (A1) of the pump source (1) and $\alpha$ is the curvature parameter of the modulation characteristics (A1, A2), and

where B denotes the factor for weighted distribution of the pump power $[1-f(P_{tot})] \times P_{tot}$ distributed only by the first distribution (V1) between the output powers of the second, third and possibly further pump sources (2, 3, ...),
$\beta$ denotes the curvature parameter of the modulation characteristic (A2) of the pump source (2) and
$\delta$ denotes the quotient from the nominal powers of the first and second pump sources (1, 2).

**9.** Method according to Claim 6, 7 or 8,
**characterised in that**
the proportion parameters f, g or 1-f, 1-g are retrieved from stored tables for appropriate setting of the output powers of the first, second and third pump source (1, 2, 3).

**10.** Method according to Claim 6, 7, 8 or 9,
**characterised in that**
in the third pump source (3) a plurality of laser diodes (LD3$_k$) are operated (k>0), the output powers (L3$_k$) of which are controlled in each case according to a third distribution to the pump power [1-g(P$_{tot}$)] x [1-f(P$_{tot}$)] x P$_{tot}$ provided for the third pump source (3),
the output powers (L3$_k$) of the individual laser diodes (LD3$_k$) are set according to further distribution factors (h1, h2, h3, h4) such that, depending on the setting of the distribution factor (h1), the third distribution of the pump power [1-g(P$_{tot}$)] x [1-f(P$_{tot}$)] x P$_{tot}$ is made on the one hand back to the second pump source (2) and on the other hand to the laser diodes (LD3$_k$) of the third pump source (3).

**Revendications**

**1.** Procédé de réglage d'un dispositif de pompage d'un amplificateur à fibre (EDFA) destiné à amplifier un signal (S) de multiplexage en longueur d'onde (WDM) transmis, et doté d'une première source de pompage (1) dont le signal de pompage agit dans la zone d'entrée de l'amplificateur à fibre (EDFA), et d'une deuxième source de pompage (2) dont le signal de pompage agit dans la zone restante de l'amplificateur à fibre (EDFA), dans lequel on détermine une puissance effective (IL) du signal WDM (S) à la sortie de l'amplificateur à fibre (EDFA) et on règle les puissances de sortie (P1) et (P2) des deux sources de pompage (1) et (2) de manière à obtenir un facteur de bruit favorable du signal WDM (S) amplifié,
et dans lequel, en présence d'une puissance de pompage totale variant selon le nombre de canaux actifs, on compare la puissance effective (IL) déterminée du signal WDM (S) avec une puissance de consigne (SL) et on ajuste une puissance de pompage totale P$_{tot}$ nécessaire, et
pour obtenir un facteur de bruit optimal du signal WDM (S), on ajuste les puissances de sortie (P1) et (P2) des deux sources de pompage (1, 2) en fonction de la puissance de pompage totale P$_{tot}$ de manière à obtenir dans l'amplificateur à fibre (EDFA), en présence d'une faible puissance de pompage totale P$_{tot}$, une forte inversion (N1) grâce à la première source de pompage (1) et une faible inversion (N2) grâce à la deuxième source de pompage (2), **caractérisé en ce qu'**avec l'augmentation de la puissance de pompage totale P$_{tot}$ la puissance de pompage de la première source de pompage (1) augmente d'abord plus fortement et ensuite plus faiblement que la puissance de pompage de la deuxième source de pompage (2).

**2.** Procédé selon la revendication 1,
**caractérisé en ce que**
on détermine des caractéristiques de réglage (A1, A2) pour ajuster les inversions (N1, N2) resp. les puissances de sortie (P1, P2) par répartition de la puissance de pompage totale P$_{tot}$ sur les deux sources de pompage (1, 2), la répartition de la puissance de pompage totale P$_{tot}$ sur les deux sources de pompage (1, 2) se faisant selon des paramètres de proportion f (P$_{tot}$), 1-f (P$_{tot}$) ajustables,
la pente de f (P$_{tot}$), en présence d'une faible puissance de pompage totale P$_{tot}$, étant positive, continue, diminuant avec l'augmentation de la puissance de pompage totale P$_{tot}$ et atteignant au minimum la valeur zéro.

**3.** Procédé selon la revendication 2,
**caractérisé en ce que**
le paramètre de proportion f est tel que :

$$f = A \cdot \exp\left[-\frac{1}{\alpha} \cdot \exp(-1) \cdot (A \cdot P_{tot})^{\alpha}\right] \quad \text{pour } P_{tot} \leq \frac{1}{A} \cdot \exp\left(\frac{1}{\alpha}\right)$$

et

$$f = \frac{1}{P_{tot}} \qquad \text{pour } P_{tot} > \frac{1}{A} \cdot \exp\left(\frac{1}{\alpha}\right)$$

A étant la pente de la caractéristique de réglage (A1) au point zéro d'excitation de la source de pompage (1) et $\alpha$ le paramètre de courbure des caractéristiques de réglage (A1, A2).

**4.** Procédé selon la revendication 2 ou 3,
**caractérisé en ce que**
on extrait le paramètre de proportion f resp. 1-f pour le réglage respectif des puissances de pompage de la première et deuxième source de pompage (1, 2) d'une table mémorisée.

**5.** Procédé selon l'une des revendications précécentes,
**caractérisé en ce que**
on introduit dans une fibre dopée erbium (EDF) de l'amplificateur à fibre (EDFA), de manière codirectionnelle et/ou contradirectionnelle, des signaux de pompage de la source de pompage (1, 2),
on utilise pour la première source de pompage (1) une longeur d'onde de pompage d'environ 980 nm et/ou 1480 nm et pour la deuxième source de pompage (2) des longeurs d'onde de pompage d'environ 980 nm et/ou 1480 nm.

**6.** Procédé de réglage d'un dispositif de pompage d'un amplificateur à fibre (EDFA) destiné à amplifier un signal (S) de multiplexage en longeur d'onde (WDM) transmis et doté d'une première source de pompage (1) dont le signal de pompage agit dans la zone d'entrée de l'amplificateur à fibre (EDFA), d'une deuxième source de pompage (2) dont le signal de pompage agit dans la zone restante de l'amplificateur à fibre (EDFA) et au moins d'une troisième source de pompage (3) dont le signal de pompage agit dans la zone de sortie de l'amplificateur à fibre (EDFA), dans lequel on détermine une puissance effective (IL) du signal WDM (S) à la sortie de l'amplificateur à fibre (EDFA) et on règle les puissances de sortie (P1, P2, P3) des sources de pompage (1, 2, 3) de manière à obtenir un facteur de bruit favorable du signal WDM (S) amplifié,
et dans lequel, en présence d'une puissance de pompage totale variant selon le nombre de canaux actifs, on compare la puissance effective (IL) déterminée du signal WDM (S) avec une puissance de consigne (SL) et on ajuste une puissance de pompage total $P_{tot}$ nécessaire, et
pour obtenir un facteur de bruit optimal du signal WDM (S), on ajuste les puissances de sortie (P1, P2, P3) des sources de pompage (1, 2, 3) en fonction de la puissance de pompage totale $P_{tot}$ de manière à obtenir dans l'amplificateur à fibre (EDFA), en présence d'une faible puissance de pompage totale $P_{tot}$, une forte inversion (N1) grâce à la première source de pompage (1) et de faibles inversions (N2, N3) grâce à la deuxième et troisième source de pompage (2, 3), et avec l'augmentation de la puissance de pompage totale $P_{tot}$, la puissance de pompage de la première source de pompage (1) augmente d'abord plus fortement et ensuite plus faiblement que la puissance de pompage de la deuxième source de pompage (2), la puissance de pompage de la deuxième source de pompage augmentant plus fortement que la puissance de pompage de la troisième source de pompage (3) de manière à obtenir de fortes inversions (N1, N2) grâce à la première et deuxième source de pompage (1, 2) et une faible inversion (N3) grâce à la troisième source de pompage (3),
et avec l'augmentation ultérieure de la puissance de pompage totale $P_{tot}$, la puissance de pompage de la deuxième source de pompage (2) augmente d'abord plus fortement et ensuite plus faiblement que la puissance de pompage de la troisième source de pompage (3).

**7.** Procédé selon la revendication 6,
**caractérisé en ce que**
on détermine des caractéristiques de réglage (A1, A2, A3) pour ajuster les inversions (N1, N2, N3) resp. les puissances de sortie (P1, P2, P3) par deux répartitions (V1, V2) de la puissance de pompage totale $P_{tot}$ sur les sources de pompage (1, 2, 3) tel que
la première répartition (V1) de la puissance de pompage totale $P_{tot}$ sur la première source de pompage (1) et sur les autres sources de pompage (2, 3) se fait selon des paramètres de proportion f ($P_{tot}$), 1-f ($P_{tot}$) ajustables, la pente de f ($P_{tot}$), en présence d'une faible puissance de pompage totale $P_{tot}$, étant positive, continue, diminuant avec l'augmentation de la puissance de pompage totale $P_{tot}$ et atteignant au minimum la valeur zéro,
et la deuxième répartition (V2) de ladite une des deux puissances de pompage [1-f ($P_{tot}$)] x $P_{tot}$ précédemment réparties sur la deuxième source de pompage (2) et sur la troisième source de pompage (3) se fait selon des paramètres de proportion g ($P_{tot}$), 1-g ($P_{tot}$) ajustables, la pente de g ($P_{tot}$) étant positive, continue, diminuant avec l'augmentation de la puissance de pompage totale $P_{tot}$ et atteignant au minimum la valeur zéro.

**8.** Procédé selon la revendication 6 ou 7,
**caractérisé en ce que**
les paramètres de proportion f et g sont tels que :

$$f = A \cdot \exp\left[-\frac{1}{\alpha} \cdot \exp(-1) \cdot (A \cdot P_{tot})^{\alpha}\right] \quad \text{pour } P_{tot} \leq \frac{1}{A} \cdot \exp\left(\frac{1}{\alpha}\right)$$

et

$$f = \frac{1}{P_{tot}} \qquad \text{pour } P_{tot} > \frac{1}{A} \cdot \exp\left(\frac{1}{\alpha}\right)$$

et

$$g = B \qquad \text{pour } P_{tot} \leq 1$$

$$g = B \cdot \exp\left[-\frac{1}{\beta} \cdot \exp(-1) \cdot \left\{\frac{\beta}{\delta} P_{tot} - 1\right)^{\beta}\right\}\right] \quad \text{pour } 1 < P_{tot} \leq \exp\left(\frac{1}{\beta}\right) \cdot \frac{\delta}{B} + 1$$

$$g = \frac{\delta}{P_{tot} - 1} \qquad \text{pour } P_{tot} > \exp\left(\frac{1}{\beta}\right) \cdot \frac{\delta}{B} + 1$$

A étant la pente de la caractéristique de réglage (A1) au point zéro d'excitation de la source de pompage (1) et $\alpha$ le paramètre de courbure des caractéristiques de réglage (A1, A2), et

B signifiant le facteur de distribution pondérée de la puissance de pompage [1-f ($P_{tot}$)] x $P_{tot}$ répartie d'abord par la première répartition (V1) entre les puissances de sortie de la deuxième, troisième et, le cas échéant, d'autres sources de pompage (2, 3,...),

$\beta$ le paramètre de courbure de la caractéristique de réglage (A2) de la source de pompage (2) et

$\delta$ le quotient des puissances nominales de la première et deuxième source de pompage (1, 2).

**9.** Procédé selon la revendication 6, 7 ou 8,
**caractérisé en ce que**
on extrait les paramètres de proportion f, g resp. 1-f, 1-g pour l'ajustage respectif des puissances de sortie de la première, deuxième et troisième source de pompage (1, 2, 3) de tables mémorisées.

**10.** Procédé selon la revendication 6, 7, 8 ou 9,
**caractérisé en ce que**
on fait fonctionner dans la troisième source de pompage (3) plusieurs diodes laser (LD3$_k$) (k>0) dont les puissances de sortie (L3$_k$) sont réglées à chaque fois selon une troisième répartition sur la puissance de pompage [1-g ($P_{tot}$)] x [1-f ($P_{tot}$)] x $P_{tot}$ prévue pour la troisième source de pompage (3),
**en ce qu'**un ajustage des puissances de sortie (L3$_k$) des différentes diodes laser (LD3$_k$) se fait selon d'autres facteurs de répartition (h1, h2, h3, h4) de sorte qu'en fonction de l'ajustage du facteur de répartition (h1), la troisième répartition de la puissance de pompage [1-g ($P_{tot}$)] x [1-f ($P_{tot}$)] x $P_{tot}$ se fait d'une part sur la deuxième source de pompage (2), d'autre part sur les diodes laser (LD3$_k$) de la troisième source de pompage (3).

## FIG 1

## FIG 2

FIG 3

FIG 4

FIG 6

FIG 5

EP 1 425 830 B1